# EUROPEAN PATENT APPLICATION

(11) **EP 2 742 904 A2**
(43) Date of publication of application: **18.06.2014**
(21) Application number: 12824280.7
(22) Date of filing: 10.08.2012
(51) Int. Cl.: A61C 8/00, A61C 13/263, A61C 5/08

(54) **ABUTMENT CAPABLE OF ACCOMMODATING CORE CROWNS MANUFACTURED AT VARIOUS ANGLES AND FUNCTIONING AS A HEALING ABUTMENT HAVING A CAP ATTACHED THERETO, METHOD FOR MANUFACTURING DENTAL IMPLANT PROSTHESES USING THE ABUTMENT, AND METHOD FOR IMPLANT SURGERY USING THE ABUTMENT**

(30) Priority: 12.08.2011 KR 20110080850
(71) Applicant: Wang, Je-Won, Daejeon 305-500 (KR)
(72) Inventor: Wang, Je-Won, Daejeon 305-500 (KR)
(74) Representative: Lukaszyk, Szymon
(86) International application number: PCT/KR2012/006396
(87) International publication number: WO 2013/025017

(57) **Abstract**

The present invention relates to an abutment capable of accommodating core crowns manufactured at various angles and functioning as a healing abutment having a cap attached thereto, to a method for manufacturing dental implant prostheses using the abutment, and to a method for implant surgery using the abutment wherein the abutment consists of an artificial tooth crown (core crown) for an abutment formed in an upper portion of a fixture and is directly bonded using cement rather than using a healing abutment, and grooves are further formed in the upper portion of the abutment and the lower portion of the crown so as to widen the contact area between the abutment and the crown, and the abutment has a protrusion at a side surface thereof.

## Description

### Technical Field

The present invention relates to an abutment capable of being used to implant procedure, accommodating core crowns manufactured at various angles and functioning as a healing abutment having a cap attached thereto, to a method for manufacturing dental implant prosthesis using the abutment, and to a method for implant surgery in the dental clinic using the abutment.

### Background Art

When a tooth falls out, denture was placed in or dental bridge procedure took place to replace the missing tooth with metal with the support from natural teeth in surrounding area.

However, this type of procedure caused various problem in the sense that it is hard to chew the food strongly with denture or artificial tooth and also because they cause harm to other teeth that are nearby.

To resolve this problem, implant procedure was introduced as one of the advancements in dental technology. This implant procedure forms artificial tooth root at the alveolar bone and combines the artificial tooth that had been manufactured similarly to the natural tooth into it such that the patient can experience the effect of using the real tooth.

Implant procedure comprises of the following steps wherein installation groove is formed by drill or other tools in order to install the fixture in the alveolar bone with a lost tooth.

Tapping procedure is performed in order to firmly install the fixture within the installation groove. Afterwards, fixture is installed in the installation groove, and then the closing screw is also installed in order to prevent foreign substances from permeating into the fixture wherein initial portion of the surgery that serves as the basic procedure is completed after the gum is covered and stitched.

For second part of the procedure, another incision is made to the stitched gum after three to six months wherein the closing screw is removed and healing abutment is installed in its place after considering the diameter of abutment to be installed and the thickness of the gum wherein the gum is stitched again so that gum in the surrounding area will not be left open.

Purpose of healing abutment in this stage is for the gum to form over the fixture before the abutment is placed in the fixture.

After two to three weeks of the second operation, healing abutment is removed wherein impression coping is put in its place and dental impression is made for teeth that are nearby and the area that impression coping was placed in.

Implant analog is used in order to create a working model made of plaster to be inserted in the same spot as fixture in the mouth by using the dental impression which was processed in the dental laboratory. Abutment is installed in upper portion of the implant analog wherein abutment is milled according to shape of the artificial crown which will be placed in the upper portion of the abutment. Wax is used to create the shape of a crown wherein it is burnt out with dental investment material to be filled with molten metal in order to cast the artificial crown.

Cast artificial crown and milled abutment are sent to the medical consultation room wherein abutment is placed in the fixture inside the mouth of the patient and the artificial crown is adhered on top of the abutment with cement as part of the implant procedure.

This is known as two-stage procedure surgery where first part of the surgery plants the fixture wherein second part surgery proceeds after certain period of time for the gum form to connect the abutment.

During this implant procedure, fixture installed in alveolar bone acts as root of the tooth and abutment connects the artificial crown and fixture as one body.

Fixture and the abutment serve as the implant structure that places artificial crown in the right position wherein such implant structure is made from metal with physical and chemical strength such as titanium.

Generally, an implant refers to a substitute for recovering lost human tissue but in dentistry, it refers to the procedure where artificially tooth is implanted.

This procedure plants the artificial dental root made from material that does not cause react negative reaction such as titanium to replace the lost dental root in the alveolar bone where tooth is missing, and then the artificial tooth is fixed to the artificial dental root to recover the tooth related function.

Regular dentures or dental prosthesis hurts teeth and bones in the surrounding area but dental implant does not harm periodontal tissue and provides advantages such as semi-permanence and being free from cavity and resembling the shape of natural tooth while retaining its functions. However, there have been cases where prosthesis falls off easily due to small adhesion area between milled abutment and artificial crown when the artificial crown with low height is bonded to the abutment by cement.

Korean Patent Registration Publication No. 10-0537219 discloses method for treating a screw-cement retained prosthesis, an abutment and an implant. The method for treating the screw-cement retained prosthesis, which relates to an internal implant, comprises the steps of providing an abutment comprising a joining projection, repositioning the joining projection to a joining groove formed in the upper portion of a fixture, engaging the abutment to the fixture by using a screw, providing a prosthetic appliance including a screw hole, and bonding the prosthetic appliance and the abutment by interposing dental cement between the abutment and the prosthetic appliance. Present invention includes all of the advantages of screw retained prosthesis and cements retained prosthesis and at the same time can solve the disadvantages thereof. Using a leading inclined surface formed in the joining projection, the abutment and prosthetic appliance are easily separated from and remounted to the fixture.

Korean Patent Registration Publication No. 10-0662583 discloses a method for crown temporary fixation implant unit which includes connecting portion that joins the crown to the abutment wherein groove is formed at the side of the abutment and penetrating groove is formed inside the crown which is located at the upper portion of the abutment to join the connecting portion inserted simultaneously into the groove of the abutment and penetrating groove of the crown to secure them as one.

Korean Patent Publication No. 10-2007-0112075 discloses a method for separable abutment for a dental implant which is secured to a fixture embedded in an alveolar bone to thereby retain a dental prosthesis in place. The separable abutment includes a lower member secured to the fixture, an upper member fixed to the dental prosthesis and an attachment structure for separately coupling the lower member and the upper member together.

Korean Patent Publication No. 10-2006-82079 discloses a method of dental implant system that comprises of abutment formed with smooth curved surface to support the material directly applied onto nose and shelf of the head portion wherein integrated abutment crown has a central portion intermediate to a post portion receivable in the bore of an implant and a head portion which includes a nose and shelf extending from the outer circumference of the central portion to the nose.

Korean Utility Model Registration Publication No. 20-0392305 discloses an integral abutment which comprises a fixture being downwardly extended with a constant length from a fixture coupling surface formed with an even surface in an upper side and having a screw provided in an external circumferential surface thereof; and an abutment for supporting an artificial tooth including a gum contacting surface slantly formed toward an upper side from a lower side which are adhered and fixed to the fixture coupling surface with adhesive in order to couple to the gum and a prosthesis coupling surface extended inversely slantly from the gum contacting surface.

### Summary of Invention

### Technical Problem

Implant method of prior art imposes problems such as artificial crown and abutment falling apart when artificial crown is small and provides only a small area for adhesion to the abutment wherein they cannot sustain inclined pressure from left and right as well as upper and lower direction. Using healing abutment for second round of surgery and using various types of inclined abutments when placed fixture and artificial crown is in different direction and milling the abutment during manufacturing process impose financial burden on the patient and makes the process more difficult. Furthermore, process of placing milled abutment before placing the artificial crown also causes inconvenience. Object of the present invention is to overcome such failures and limitations as stated above.

### Solution to Problem

In order to overcome the above problem, object of the present invention is to make the adhesive area of the abutment smaller to place the abutment cap which can replace healing abutment which eliminates the need to mill the abutment in the processing room. Direction of the prosthesis can be adjusted without any restriction as there is certain degree of incline in adhesive area of the artificial crown and there is no need for milling the abutment. It also makes medical treatment process easier as artificial crown can be directly adhered to abutment secured in the fixture after removing abutment cap.

### Advantageous Effects of Invention

Present invention is economical as it does not use separate healing abutment and provides the following advantage wherein foreign substances are kept out as there is no gap between abutment of the present invention secured to the fixture and the periodontal tissue during the first or second surgery. Moreover, there are no stimulations caused by removal procedure which prevents bone resorption caused by periodontal disease.

Furthermore, it is possible to change the direction in any angle even when fixture is placed in the wrong spot as outer and inner part of the abutment of the present invention is inclined and as only small portion of the adhesive area of the artificial crown is exposed. Therefore, an expensive and specialized abutment such as angled abutment is no longer needed. Present invention can provide convenience and excellent cost-effectiveness as there is no need to mill the abutment. Unlike abutment of prior art, abutment of the present invention can firmly withstand pressure from the top and sides as it is adhered with cement in both inner and outer part in order to prevent the abutment and artificial crown from falling off. Moreover, it can be immediately adhered with cement after removing the cap on top when artificial crown is installed in place that simplifies the treatment and makes it more convenient thereby reducing physical pain and financial burden as well as saving time for doctor who performs the procedure.

### Brief Description of Drawings

Fig. 1 is a diagram that illustrates application of abutment that can accommodate core crowns manufactured in various angles and functions as healing abutment with the cap according to the embodiment of present invention.
Fig. 2 is a diagram illustrates detailed view of abutment that can accommodate core crowns manufactured in various angles and functions as healing abutment with the cap according to the embodiment of present invention.
Fig. 3 is an exploded view that illustrates abutment accommodating core crowns manufactured in various angles and functions as healing abutment with the cap according to the embodiment of present invention.
Fig. 4 is a process drawing of implant of the prior art.
Fig. 5 is a process drawing that illustrates abutment that can accommodate core crowns manufactured in various angles and functions as healing abutment with the cap according to the embodiment of present invention.
Fig. 6 is another example that illustrates abutment that can accommodate core crowns manufactured in various angles and functions as healing abutment with the cap according to the embodiment of present invention.
Fig. 7 and 8 illustrates the application of abutment that can accommodate core crowns manufactured in various angles and functions as healing abutment with the cap according to the embodiment of present invention.

### Preferred Embodiments of the Invention

The present invention comprises a central through-hole 31 of an abutment 3 that penetrates middle area of the abutment 3 from an upper portion to a lower portion thereof, an upper portion 39 of the abutment 3 that forms the border of central through-hole 31, an inner upper portion 32 of the abutment 3 that is formed at the inner lower portion of upper portion 39 of the abutment 3 and whose range of the slope is from 1 to 30 and the length (L) is within the range of 0.5 mm to 3.5 mm, a lateral upper portion 36 and a lateral lower portion 35 which are slantly formed upwardly and downwardly on the basis of a vertex projecting from the side surface of the abutment 3 and whose range of the slope is from 5 to 45, and an abutment cap 4 which is mounted on the upper portion 39 of the abutment 3.

Abutment that accommodates core crowns manufactured in various angles wherein the crown 5 is adhered with the cement to the upper portion 39 of the abutment 3, the inner upper portion 32 of the abutment 3, the lateral upper portion 36 of the abutment 3 and functions as healing abutment with the cap can be used for the following procedure.

In case of single stage procedure surgery, installation groove is installed to place the fixture to the alveolar bone where tooth is missing by using tools, such as a drill. After fixture is placed in the installation groove, abutment that can accommodate core crowns manufactured in various angles and functions as healing abutment with the cap is put in place wherein abutment cap is placed on its upper portion and the gum on the lateral area are stitched to prevent fissure.

After three to five months, abutment cap is removed and impression coping is put in its place wherein dental impression is made for teeth that are nearby and the area that impression coping was placed. Then, the dental impression and impression cap are sent to the processing room.

Implant analog is used to create working model made of plaster to be inserted in the same spot as fixture in the mouth. Wax sculpted artificial crown is placed on top of implant analog of the working model wherein sculpted wax crown is placed in dental investment material to make a cast artificial crown or wax artificial crown is scanned to create the artificial crown by using the CAD/CAM. Abutment cap inside the mouth of the patient is removed and the artificial crown is adhered on top of the abutment with cement as part of the implant procedure.

### Description of Embodiments

In order to achieve the above objective, the present invention provides manufacturing method of implant prosthesis and the method for implant procedure that uses abutment that can accommodate core crowns manufactured in various angles and functions as healing abutment with the cap wherein the artificial crown and abutment is adhered simultaneously in both inner and outer part which have inclined angles to provide free range for prosthesis to widen the adhesive area of abutment and artificial crown. During the processing stage, there is no need for milling and the cap is placed on top of the abutment of the present invention in order to be used as healing abutment which eliminates the need for healing abutment.

Implant method of the present invention is to form an installation groove by using a drill or other equipments to place the fixture into the alveolar bone with the missing tooth wherein the fixture is placed into the installation groove and abutment of the present invention is placed into the fixture to prevent foreign substances from infiltrating the area. Abutment cap is placed above the abutment wherein gum on lateral area is stitched in order for upper part of the abutment cap to be exposed to finish the first part of the surgery. After three to five months, cap placed on the upper part of the abutment is removed wherein impression cap is put in its place.

Impression material is used to create a dental impression wherein impression cap and stiffened dental impression is sent to the processing room. Implant analog that has the same shape with the alveolar bone that will undergo the treatment is used to create working model made of plaster wherein artificial crown is sculpted with wax on top of analog of the working model and the sculpted wax crown is inserted into the dental investment material to create the cast of artificial crown or the wax artificial crown can be scanned to create artificial crown by using the CAD/CAM. Abutment cap inside the mouth of the patient is removed and the artificial crown is adhered on top of the abutment with cement as part of the implant procedure.

The present invention provides esthetic prosthesis and keeps foreign substances out as there is no gap between the abutment and periodontal tissue which in turn prevents bone resorption caused by periodontal disease and can firmly withstand pressure from the top and the sides during mastication as adhesive area is located in both inner and outer part that prevents abutment and artificial crown from falling off even after prolonged use. The present invention can manufacture durable artificial crown even when the size of the crown is so small that abutment of prior art cannot be used as it manufactures core type of artificial crown simultaneously adhered both inner and outer part with cement. Moreover, as adhesive area of the artificial crown is small and has a very small exposed area outside the gum, there is no need for milling process or special abutment. With the cap on the upper part of the abutment of present invention, it can be used as healing abutment which simplifies the treatment and manufacturing process as well as making it more affordable.

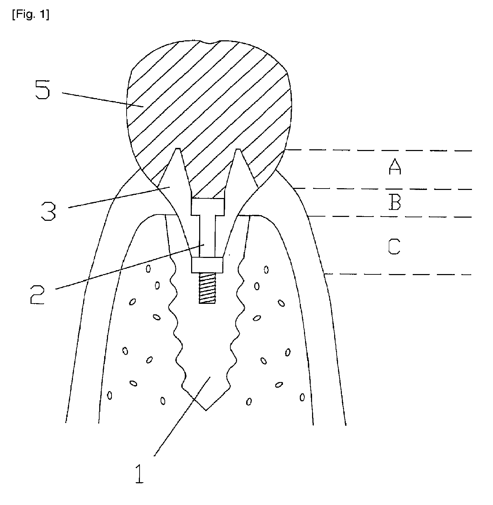

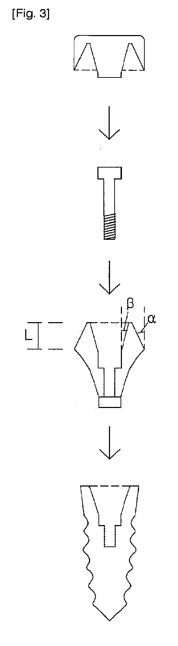

Abutment that can accommodate core crowns manufactured in various angles and functions as healing abutment with the cap according to the embodiment of present invention has the following structure as illustrated in Fig. 1 and Fig. 3 wherein a connecting screw 2 is inserted into the central through-hole 31 of the abutment 3 that penetrates middle area of the abutment 3 from the upper portion to the lower portion thereof to connect it to the fixture 1 and the abutment cap 4 is placed in the upper portion 39 of the abutment 3 wherein the crown 5 is adhered with cement on the upper portion 39 of the abutment 3 that forms the border of the central through-hole 31 of the abutment 3, the inner upper portion 32 of the abutment 3 and the lateral upper potion 36 of the abutment 3 which is classified from the lateral lower portion 35 of the abutment 3 into upper portion and lower portion on the basis of a vertex projecting from the side surface of the abutment 3.

Incline (a) for the lateral upper portion 36 of the abutment 3 is manufactured within the range of 5 to 45 and the inclination in the outer portion is necessary for prosthesis to be in several directions and the range of the angle can be clinically occur.

Incline for the inner upper portion 36 of the abutment 3 is manufactured within the range of 1 to 30 and inclination in the inner portion is to compensate for the difference of angles in two implant fixtures when two or more implant prostheses are placed after being merged into one.

Length (L) of the lateral upper portion 36, 36-1 of the abutment 3 is manufactured within the range of 0.5 mm to 3.5 mm. Length (L) is necessary as it needs to be minimally exposed in order to be used as healing abutment and it needs to be short as possible in order to manufacture it for the prosthesis without milled abutment and also when height of the artificial crown is less than 4mm.

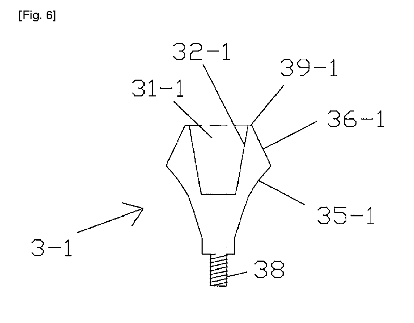

Abutment that can accommodate core crowns manufactured in various angles and functions as healing abutment with the cap according to the embodiment of present invention has the following structure as illustrated in Fig. 6 wherein it comprises a groove 31-1 formed at a central upper portion of abutment 3-1, a fixture connecting part 38 with screw thread protruding downward that connects to the fixture 1, an abutment cap 4-1 mounted on the upper part 39-1 of the abutment 3-1 and the crown 5 adhered with cement to the upper part 39-1 of the abutment 3-1, an inner upper portion 32-1 of the abutment 3-1 and side 35-1, 36-1 of the abutment 3-1.

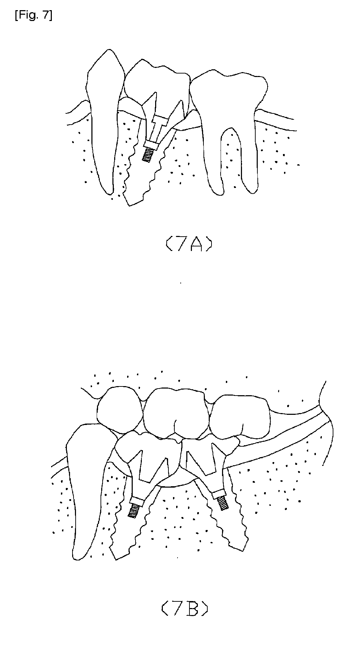

Fig. 7 is illustrates various application of abutment that can accommodate core crowns manufactured in various angles and functions as healing abutment with the cap according to the embodiment of present invention.

Artificial crown of the present invention can be manufactured through casting or by making use of CAD/CAM to be adhered directly to abutment of the present invention.

Present invention as described in detail by examples is as follows.

### Example 1

In case of single stage procedure surgery, installation groove is installed to place the fixture to the alveolar bone where tooth is missing with drill or other equipments. After fixture is placed in the installation groove, abutment that can accommodate core crowns manufactured in various angles and functions as healing abutment with the cap is put in place wherein abutment cap is placed on its upper portion and the gum on the lateral area are stitched to prevent fissure.

After three to five months, abutment cap is removed and impression coping is put in its place wherein dental impression is made for teeth that are nearby and the area that impression coping was placed. Then, the dental impression and impression cap are sent to the processing room.

By making use of stiffened dental impression, implant analog, which is a replacement for the fixture, is used to create working model made of plaster to be inserted in the same spot as fixture in the mouth. Wax sculpted artificial crown is placed on top of implant analog of the working model wherein sculpted wax crown is placed in dental investment material to make a cast artificial crown or wax artificial crown is scanned to create the artificial crown by using the CAD/CAM. Abutment cap inside the mouth of the patient is removed and the artificial crown is adhered on top of the abutment with cement as part of the implant procedure.

### Example 2

In case of two-stage procedure surgery, installation groove is installed to place the fixture to the alveolar bone where tooth is missing with drill or other equipments. After fixture is placed in the installation groove, installation groove is installed to place the fixture to the alveolar bone where tooth is missing with drill or other equipments. After fixture is placed in the installation groove, closing screw is used in order to prevent foreign substance from infiltrating the fixture.

The gum is completely covered and stitched to complete first part of the surgery wherein incision is made on the gum three to five months after the surgery to remove the closing screw, place the abutment and abutment cap on top wherein gum on both sides are stitched with upper part of the abutment cap to complete the second part of the surgery.

After two to three weeks, abutment cap on top of the abutment is removed wherein impression cap is put in its place. Impression material is used create a dental impression wherein impression cap and stiffened dental impression is sent to the processing room. Implant analog that has the same shape with the alveolar bone that will undergo the treatment is used to create working model made of plaster wherein artificial crown is sculpted with wax on top of analog of the working model and the sculpted wax crown is inserted into the dental investment material to create the cast of artificial crown or the wax artificial crown can be scanned to create artificial crown by using the CAD/CAM. Abutment cap inside the mouth of the patient is removed and the artificial crown is adhered on top of the abutment with cement as part of the implant procedure.

Detailed explanation in reference to drawings of the present invention is as follows.

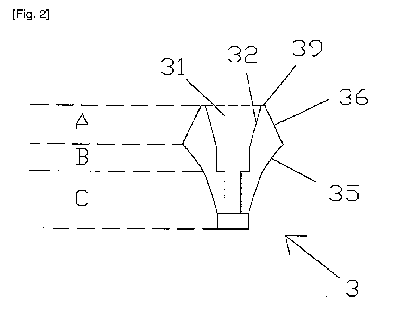

Fig. 1 is a diagram that illustrates application of abutment that can accommodate core crowns manufactured in various angles and functions as healing abutment with the cap according to the present invention and the Fig. 2 is a diagram that illustrates detailed view of abutment that can accommodate core crowns manufactured in various angles and functions as healing abutment with the cap according to the present invention.

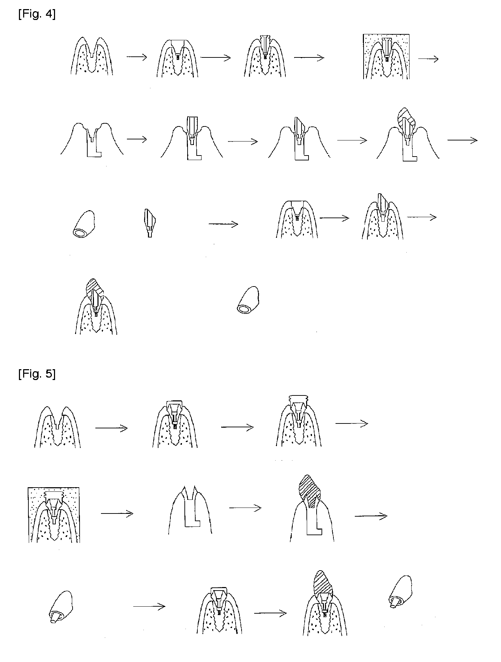

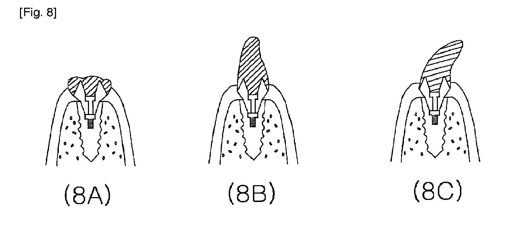

Fig. 3 is an exploded view that illustrates abutment accommodating core crowns manufactured in various angles and functions as healing abutment with the cap according to the present invention, Fig. 4 is a process drawing of implant of the prior art, Fig. 5 is a process drawing that illustrates abutment that can accommodate core crowns manufactured in various angles and functions as healing abutment with the cap according to the present invention, Fig. 6 is another example that illustrates abutment accommodating core crowns manufactured in various angles and functions as healing abutment with the cap according to the present invention, and Fig. 7 and 8 illustrates application of abutment that can accommodate core crowns manufactured in various angles and functions as healing abutment with the cap according to the present invention, wherein they depict fixture 1, connecting screw 2, abutment 3, 3-1, abutment cap 4. 4-1, 4-2, crown 5, central through-hole 31 of the abutment, inner upper portion 32, 32-1, 32-2 of the abutment, lateral lower portion 35, 35-1 of the abutment, lateral upper portion 36, 36-1 of the abutment, fixture connecting part 38, upper portion 39, 39-1, 39-2 of the abutment, attachment area (A) for artificial crown, gum penetration area (B), and fixture securing part (C).

Structure of the abutment that can accommodate core crowns manufactured in various angles and functions as healing abutment with the cap according to the embodiment of present invention illustrated in Fig. 1 and Fig. 3 is as follows.

The structure comprises a central through-hole 31 of an abutment 3 that penetrates middle area of the abutment 3 from an upper portion to a lower portion thereof, an upper portion 39 of the abutment 3 that forms the border of central through-hole 31, an inner upper portion 32 of the abutment 3 that is formed at the inner lower portion of the upper portion 39 of the abutment 3 and whose range of the slope is from 1 to 30 and the length (L) is within the range of 0.5 mm to 3.5 mm, a lateral upper portion 36 and a lateral lower portion 35 which are slantly formed upwardly and downwardly on the basis of a vertex projecting from the side surface of the abutment 3 and whose range of the slope is from 5 to 45, and an abutment cap 4 which is mounted on the upper portion 39 of the abutment 3.

Abutment that accommodates core crowns manufactured in various angles wherein the crown 5 is adhered with the cement to the upper portion 39 of the abutment 3, the inner upper portion 32 of the abutment 3, the lateral upper portion 36 of the abutment 3 and functions as healing abutment with the cap can be used for the following procedure.

The structure may comprise a connecting screw 2 which is inserted into the central through-hole 31 of the abutment 3 that penetrates middle area of the abutment 3 from the upper portion to the lower portion thereof, an abutment cap 4 placed in the upper portion 39 of the abutment 3, and the crown 5 adhered with cement on the upper portion 39 of the abutment 3, the inner upper portion 32 of the abutment 3 and the lateral upper potion 36 of the abutment 3 which is classified from the lateral lower portion 35 of the abutment 3 into upper portion and lower portion on the basis of a vertex projecting from the side surface of the abutment 3.

Fig. 6A is another example illustrates abutment that can accommodate core crowns manufactured in various angles and functions as healing abutment with the cap according to the present invention wherein the structure is comprised of groove 31-1 formed at a central upper portion of abutment 3-1, upper portion 39-1 of the abutment 3-1 that forms the border of the groove 31-1, inner upper portion 32-1 of abutment 3-1 formed at the inner lower portion of the upper portion 391-1, lateral upper and lower portion 36-1, 35-1 formed at the side surface of abutment 3-1, a fixture connecting part 38 with screw thread protruding downward, an abutment cap 4-1 mounted on the upper part 39-1 of the abutment 3-1 and the crown 5 adhered with cement to the upper part 39-1 of the abutment 3-1, an inner upper portion 32-1 of the abutment 3-1 and side 35-1, 36-1 of the abutment 3-1.

Fig. 7 illustrates the application of abutment that can accommodate core crowns manufactured in various angles and functions as healing abutment with the cap according to the present invention.

Fig. 8A illustrates the application of abutment that can accommodate core crowns manufactured in various angles and functions as healing abutment with the cap according to the present invention when the occlusal vertical dimension is less than 4mm.

Fig. 8B illustrates the application of abutment that can accommodate core crowns manufactured in various angles and functions as healing abutment with the cap according to the present invention and showing that it can be used without milled abutment.

Fig. 8C illustrates the application of abutment that can accommodate core crowns manufactured in various angles and functions as healing abutment with the cap according to the present invention in case wherein angle of the fixture and prosthesis is different.

### Ranking List Free Text

Fixture 1, connecting screw 2, abutment 3, 3-1, 3-2, abutment cap 4, 4-1, 4-2, crown 5, central penetration pipe of the abutment 31, groove 31-1, inner portion of upper part of the abutment 32, 32-1, 32-2, side of lower part of the abutment 35, 35-1, side of upper part of the abutment 36, 36-1, fixture connecting part 38, upper part of the abutment 39, 39-1, 39-2, attachment area for artificial crown (A), gum penetration area (B), and fixture securing part (C).

## Claims

1. Abutment that accommodates core crowns manufactured in various angles and functions as healing abutment with the cap, comprising:
a central through-hole (31) of the abutment (3) that penetrates the middle area of the abutment (3) from the upper portion to the lower portion thereof;
a connecting screw (2) inserted into the central through-hole (31) of the abutment (3) in order to be connected a fixture;
an upper portion (39) of the abutment (3) that forms the border of the central through-hole (31);
an inner upper portion (32) of the abutment (3) that is formed at the inner lower portion of the upper portion (39) of the abutment (3) and provided with a slop;
a lateral upper portion (36) and a lateral lower portion (35) of the abutment (3) which are formed upwardly and downwardly on the basis of a vertex projecting from the side surface of the abutment (3) and provided with a slop, respectively.

2. Abutment that accommodates core crowns manufactured in various angles and functions as healing abutment with the cap, comprising:
a groove (31-1) formed at a central upper portion of the abutment (3-1);
an upper portion (39-1) of the abutment (3-1) that forms the border of the groove (31-1);
an inner upper portion (32) of the abutment (3) that is formed at the inner lower portion of the upper portion (39-1) of the abutment (3) and provided with a slop;
a lateral upper portion (36) and a lateral lower portion (35) of the abutment (3) which are formed upwardly and downwardly on the basis of a vertex projecting from the side surface of the abutment (3) and provided with a slop, respectively;
a fixture connecting part (38) with screw thread protruding downward that connects to the fixture (1).

3. Abutment that accommodates core crowns manufactured in various angles and functions as healing abutment with the cap according to claim 1 or 2, wherein the slop of the lateral upper portion (36, 36-1) of the abutment 3 has the angle of 5 to 45.

4. Abutment that accommodates core crowns manufactured in various angles and functions as healing abutment with the cap according to claim 1 or 2, wherein the slop of the inner upper portion (32, 32-1) of the abutment (3) has the angle of 1 to 30.

5. Abutment that accommodates core crowns manufactured in various angles and functions as healing abutment with the cap according to claim 1 or 2, wherein the height of the lateral upper portion (36) of the abutment (3) is 0.5 mm to 3.5mm.

6. Abutment that accommodates core crowns manufactured in various angles and functions as healing abutment with the cap according to claim 1 or 2, wherein an abutment cap (4, 4-1) is added to the upper portion (39, 39-1) of the abutment (3).

7. Implant method using the abutment that accommodates core crowns manufactured in various angles and functions as healing abutment with the cap, comprising the steps of:
forming installation groove in order to place a fixture to the alveolar bone where tooth is missing by using drill or other equipments;
placing the fixture in the installation groove;
coupling the abutment that can accommodate core crowns manufactured in various angles and functions as healing abutment with the cap, to the fixture;
placing an abutment cap on the upper portion of the abutment;
stitching the gum on the lateral area in order to prevent fissure and completing the surgery;
after three to five months, removing the abutment cap and putting an impression cap in its place;
making an dental impression for teeth that are nearby and the area that impression coping was placed;
sending the dental impression and the impression cap to the processing room;
creating a working model made of plaster by using an implant analog to be inserted in the same spot as the fixture in the mouth and placing wax sculpted artificial crown on top of the implant analog of the working model;
placing sculpted wax crown in dental investment material to make a cast artificial crown or scanning wax artificial crown to create the artificial crown;
removing the abutment cap inside the mouth of the patient and adhering the artificial crown on top of the abutment with cement as part of the implant procedure.

8. Implant method using the abutment that accommodates core crowns manufactured in various angles and functions as healing abutment with the cap; comprising the steps of:
forming an installation groove in order to place a fixture to the alveolar bone where tooth is missing by using drill or other equipments placing the fixture in the installation groove;
coupling a closing screw to the fixture in order to prevent foreign substance from infiltrating the fixture;
covering and stitching the gum to complete first part of the surgery;
after three to five months, making incision on the gum after the surgery to remove the closing screw, placing the abutment and an abutment cap on top, and stitching gum on both sides with upper portion of the abutment cap to complete the second part of the surgery;
after two to three weeks, removing the abutment cap on top of the abutment and putting an impression cap in its place;
creating a dental impression by using impression material, sending the impression cap and stiffened dental impression to the processing room;
creating a working model made of plaster by using an implant analog to be inserted in the same spot as the fixture in the mouth and placing wax sculpted artificial crown on top of the implant analog of the working model;
sculpting an artificial crown with wax on top of the implant analog of the working model and inserting the sculpted wax crown into the dental investment material to create the cast of artificial crown;
removing the abutment cap inside the mouth of the patient and adhering the artificial crown on top of the abutment with cement as part of the implant procedure.
